# EUROPEAN PATENT APPLICATION

(11) **EP 4 386 965 A1**
(43) Date of publication of application: **19.06.2024**
(21) Application number: 22923491.9
(22) Date of filing: 07.12.2022
(51) Int. Cl.: H01M 50/497, H01M 50/403

(54) **SEPARATOR OF ELECTRODE ASSEMBLY, AND METHOD AND DEVICE FOR PREPARING SEPARATOR OF ELECTRODE ASSEMBLY**

(30) Priority: 27.01.2022 CN 202210102623
(71) Applicant: Contemporary Amperex Technology Co., Limited, Ningde City, Fujian 352100 (CN)
(72) Inventor: XIAO, Jun, Ningde City, Fujian 352100 (CN); SUN, Caiying, Ningde City, Fujian 352100 (CN); DUAN, Song, Ningde City, Fujian 352100 (CN); WAN, Guangming, Ningde City, Fujian 352100 (CN); LIU, Fei, Ningde City, Fujian 352100 (CN)
(74) Representative: Herrmann, Uwe
(86) International application number: PCT/CN2022/137313
(87) International publication number: WO 2023/142701

(57) **Abstract**

A first surface (23a) of a separator (23) for an electrode assembly includes a first passage region (231) and a first blocking region (232). The first blocking region (232) is formed by spraying or scraping an insulating material on edge regions on two sides of the first surface (23a) in a first direction X, the first direction X is perpendicular to an extension direction of the separator (23), and the first passage region (231) is the region on the first surface (23a) except the first blocking region (232). The first passage region (231) is configured for passage of ions from an electrolyte, and the first blocking region (232) is configured to block the ions from the electrolyte.

## Description

### Cross-Reference to Related Application

The present application claims the priority of Chinese Patent Application No. CN 202210102623.4 entitled "SEPARATOR OF ELECTRODE ASSEMBLY, AND METHOD AND DEVICE FOR PREPARING SEPARATOR OF ELECTRODE ASSEMBLY" and filed on January 27, 2022, which is incorporated herein by reference in its entirety.

### Technical Field

The present application relates to the field of batteries, and more specifically, to a separator film of an electrode assembly, and a method and device for preparing a separator film of an electrode assembly.

### Background

Battery cells are one of the core components of various types of electrical devices. People have increasingly higher requirements for the performance of battery cells, especially their safety performance. The battery cell includes an electrode assembly and an electrolytic solution, the electrode assembly being composed of an anode electrode plate, a cathode electrode plate and a separator. The separator is a porous and electronically insulating material. The separator mainly has an electronic insulation function, and also conducts ions from the electrolytic solution to prevent lapping and short circuiting between the cathode electrode plate and the anode electrode plate. The anode electrode plate is generally configured to wrap the cathode electrode plate, with the excess part being to prevent the anode electrode plate from lithium plating and to prevent burrs generated when forming a tab by die-cutting from piercing the separator.

However, during production, it is likely that the anode electrode plate cannot wrap the cathode electrode plate, or the anode electrode plate has poor size when wrapping the cathode electrode plate. At present, in order to prevent such phenomena from occurring during the manufacturing process, X-ray online detection is usually required. This type of detection has problems such as time-consuming, low efficiency, increased manufacturing costs, and low detection accuracy. Therefore, there is an urgent need for a solution to solve the current problems.

### Summary of the Invention

A separator of an electrode assembly and a method and device for preparing a separator of an electrode assembly according to embodiments of the present application can improve the performance of the separator and in turn improve the performance of the electrode assembly in a battery cell.

In a first aspect, a separator of an electrode assembly is provided, in which a first surface of the separator includes a first passage region and a first blocking region; the first blocking region is formed by spraying or scraping an insulating material on edge regions on two sides of the first surface in a first direction, the first direction is perpendicular to an extension direction of the separator, and the first passage region is the region on the first surface except the first blocking region; and the first passage region is configured for passage of ions from an electrolyte, and the first blocking region is configured to block the ions from the electrolyte.

Therefore, since the separator of the embodiments of the present application is provided with a first blocking region in the edge regions, it can block the ions from the electrolyte. Therefore, when the separator is used to form an electrode assembly by winding, the lengths of the anode electrode plate and the cathode electrode plate in the first direction are no longer limited. The first blocking region can be used to avoid the problem of lithium plating of the anode electrode plate, regardless of whether the length of the anode electrode plate in the first direction is greater than, less than, or equal to the length of the cathode electrode plate in the first direction. The problem of lithium plating of the anode electrode plate is avoided by using the first blocking region, thereby reducing the manufacturing difficulty and cost of the electrode assembly and improving the manufacturing efficiency of the electrode assembly. Moreover, the insulating material sprayed or scraped on the first blocking region can increase the strength of this region, effectively prevent burrs left after the electrode plate is die-cut to form a tab from piercing the first blocking region of the separator, and reduce the risk of short circuit caused by the burrs piercing the separator.

In some embodiments, a dimension of the first passage region in the first direction is less than or equal to a first dimension, the first dimension being a dimension of an anode electrode plate in the first direction that is isolated by the separator; and a dimension of the separator in the first direction is greater than the first dimension and greater than a second dimension, the second dimension being a dimension of a cathode electrode plate in the first direction that is isolated by the separator.

The dimension of the first separator in the first direction is greater than the first dimension and greater than the second dimension. In this way, in the electrode assembly, two ends of the anode electrode plate in the first direction and two ends of the cathode electrode plate in the first direction do not exceed two ends of the separator in the first direction, to ensure that the separator can block the anode electrode plate from the cathode electrode plate to avoid short circuit.

The dimension of the first passage region of the separator in the first direction is less than or equal to the first dimension. In this way, in the formed electrode assembly, two boundary lines of the first passage region in the first direction do not exceed the corresponding ends of the anode electrode plate in the first direction respectively, that is, the two ends of the anode electrode plate in the first direction correspond to the first blocking region. In this way, no matter the dimension of the cathode electrode plate in the first direction is greater than, or equal to, or less than the dimension of the anode electrode plate in the first direction, or in other words, the dimension of the first passage region in the first direction is less than, or equal to, or greater than the second dimension, the problem of lithium plating can be avoided by means of the first blocking region, the dimension requirements during the manufacturing of the anode electrode plate and the cathode electrode plate are reduced, the cost of using rays for detection is thus reduced, and the manufacturing efficiency of the electrode assembly is improved.

In some embodiments, the first blocking region includes a first sub-region and a second sub-region distributed in the first direction and located on two sides of the first passage region, and a value range of a dimension of the first sub-region and/or the second sub-region in the first direction is [2 mm, 3 mm].

The dimension of the first sub-region and/or the second sub-region in the first direction should not be set too large to avoid increasing costs and causing waste; but it should also not be set too small, as it will increase the difficulty of spraying or scraping the insulating material; and during the manufacturing of the electrode assembly, it is likely to affect the performance of the first blocking region due to errors and other reasons.

In some embodiments, the dimension of the first sub-region in the first direction is equal to the dimension of the second sub-region in the first direction, so that the separator is axially symmetrical to facilitate the subsequent manufacturing of the electrode assembly.

In some embodiments, the dimension of the first passage region in the first direction is less than or equal to the second dimension, so as to avoid lithium plating.

In some embodiments, the first surface is a surface of the separator facing the cathode electrode plate. Since the burrs are more likely to occur when the tab of the cathode electrode plate is die-cut, the provision of the first blocking region on the surface facing the cathode electrode plate can not only avoid lithium plating, but also reduce the possibility of the burrs piercing the separator.

In some embodiments, the second surface of the separator includes a second passage region and a second blocking region, the second surface is arranged opposite to the first surface, the second blocking region is formed by spraying or scraping an insulating material on edge regions on two sides of the second surface in the first direction, the second passage region is the region on the second surface except the second blocking region, the second passage region is configured for passage of ions from an electrolyte, and the second blocking region is configured to block the ions from the electrolyte.

The provision of the first blocking region and the second blocking region respectively on the two surfaces of the separator can effectively avoid the problem of lithium plating, and can further increase the thickness of the two ends of the separator, that is, increase the strength of the two ends of the separator, and thus can avoid the burrs from piercing the separator and avoid short circuit, further improving the performance of the electrode assembly.

In some embodiments, a dimension of the second passage region in the first direction is less than or equal to a first dimension, the first dimension being a dimension of an anode electrode plate in the first direction that is isolated by the separator, so as to avoid lithium plating.

In some embodiments, the second blocking region includes a third sub-region and a fourth sub-region distributed in the first direction and located on two sides of the second passage region, and a value range of a dimension of the third sub-region and/or the fourth sub-region in the first direction is [2 mm, 3 mm].

The dimension of the third sub-region and/or the fourth sub-region in the first direction should not be set too large to avoid increasing costs and causing waste; but it should also not be set too small, as it will increase the difficulty of spraying or scraping the insulating material; and during the manufacturing of the electrode assembly, it is likely to affect the performance of the second blocking region due to errors and other reasons.

In some embodiments, the dimension of the third sub-region in the first direction is equal to the dimension of the fourth sub-region in the first direction, so that the separator is axially symmetrical to facilitate the subsequent manufacturing of the electrode assembly.

In some embodiments, two boundary lines of the second passage region in the first direction are respectively flush with corresponding boundary lines of the first passage region in the first direction. In this way, the two surfaces of the separator remain consistent. When manufacturing the electrode assembly, it is not necessary to distinguish the orientations of the two surfaces of the separator, facilitating the manufacturing and improving the manufacturing efficiency.

In some embodiments, the insulating material is aluminum oxide and/or silicon dioxide.

In some embodiments, the material of the passage region includes at least one of: polypropylene (PP), polyethylene (PE) and poly vinylidene fluoride (PVDF).

In a second aspect, a motor assembly is provided, including: an anode electrode plate; a cathode electrode plate; and a separator in the first aspect or according to any one of the embodiments in the first aspect, wherein the separator is arranged between the anode electrode plate and the cathode electrode plate to isolate the anode electrode plate from the cathode electrode plate.

In some embodiments, two boundary lines of the first passage region in the first direction do not exceed corresponding ends of the anode electrode plate in the first direction respectively, so as to avoid lithium plating.

In some embodiments, the second surface of the separator includes a second passage region and a second blocking region, the second surface is arranged opposite to the first surface, the second blocking region is formed by spraying or scraping an insulating material on edge regions on two sides of the second surface in the first direction, the second passage region is the region on the second surface except the second blocking region, the second passage region is configured for passage of ions from an electrolyte, and the second blocking region is configured to block the ions from the electrolyte; and two boundary lines of the second passage region in the first direction do not exceed corresponding ends of the anode electrode plate in the first direction respectively, so as to avoid lithium plating.

In some embodiments, two ends of the cathode electrode plate in the first direction are respectively flush with corresponding ends of the anode electrode plate in the first direction, thereby reducing the cost of the electrode assembly while avoiding lithium plating.

In some embodiments, the electrode assembly is formed by winding the anode electrode plate, the separator and the cathode electrode plate around a winding axis, and the first direction is the direction of the winding axis.

In some examples, the electrode assembly is configured such that a plurality of first anode electrode plates, the separator and a plurality of second cathode electrode plates are alternately stacked in a second direction, which is perpendicular to the first direction.

In a third aspect, a battery cell is provided, including: an electrode assembly in the second aspect or according to any one of the embodiments in the second aspect.

In a fourth aspect, a battery is provided, including: a battery cell in the third aspect.

In a fifth aspect, an electrical device is provided, including: a battery in the fourth aspect, the battery being configured to supply electric energy to the electrical device.

In some embodiments, the electrical device is a vehicle, a ship or a spacecraft.

In a sixth aspect, a method for preparing a separator of an electrode assembly is provided, the method including: providing a mask on a first surface of a separator to be processed, wherein two ends of the separator to be processed in a first direction respectively exceed corresponding ends of the mask in the first direction, a region covered by the mask is a first passage region of the first surface, the first passage region is configured for passage of ions from an electrolyte, and the first direction is perpendicular to an extension direction of the separator to be processed; spraying or scraping an insulating material on parts, which exceed the mask, of the separator to be processed at two ends in the first direction to obtain a first blocking region of the first surface, wherein the first blocking region is configured to block the ions from the electrolyte; and removing the mask to obtain the separator of the electrode assembly.

In some embodiments, the mask is a polyethylene terephthalate (PET) film.

In a seventh aspect, a device for preparing a separator of an electrode assembly is provided, the device including modules for performing the method in the sixth aspect.

### Description of Drawings

Fig. 1 is a schematic structural diagram of a conventional electrode assembly;
Fig. 2 is a schematic structural diagram of a vehicle disclosed in an embodiment of the present application;
Fig. 3 is a partial schematic diagram of a separator disclosed in an embodiment of the present application;
Fig. 4 is a schematic diagram of the preparation of a separator of an electrode assembly disclosed in an embodiment of the present;
Fig. 5 is a schematic diagram of a partially deployed electrode assembly disclosed in an embodiment of the present application;
Fig. 6 is a front view of a partially deployed electrode assembly disclosed in an embodiment of the present application;
Figs. 7 to 12 are several possible schematic diagrams of partial cross-sections taken along a thickness direction of an electrode assembly disclosed in the embodiments of the present application;
Fig. 13 is another partial schematic diagram of a separator disclosed in an embodiment of the present application;
Figs. 14 to 17 are several possible schematic diagrams of partial cross-sections taken along a thickness direction of another electrode assembly disclosed in the embodiments of the present application;
Fig. 18 is a schematic flowchart of a method for preparing a separator of an electrode assembly disclosed in an embodiment of the present application; and
Fig. 19 is a schematic block diagram of a device for preparing a separator of an electrode assembly disclosed in an embodiment of the present application.

In the accompanying drawings, the figures are not necessarily drawn to scale.

### Detailed Description

Technical solutions of the present application will be described below with reference to the accompanying drawings.

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, "a plurality of' means two or more (including two), similarly, "a plurality of groups" means two or more groups (including two groups), and "a plurality of sheets" means two or more sheets (including two sheets).

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

In the present application, the battery cell may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present application. The battery cell may be in a cylindrical shape, a flat shape, a cuboid shape or another shape, which is also not limited in the embodiments of the present application. The battery cells are generally classified into three types depending on the way of package: cylindrical battery cells, prismatic battery cells and pouch battery cells, which are also not limited in the embodiments of the present application.

The battery cell includes an electrode assembly and an electrolytic solution, the electrode assembly being composed of a cathode electrode plate, an anode electrode plate and a separator. The operation of the battery cell mainly relies on the movement of metal ions between the cathode electrode plate and the anode electrode plate. The cathode electrode plate includes a cathode current collector and a cathode active material layer. The cathode active material layer is coated on a surface of the cathode current collector, and the current collector that is not coated with the cathode active material layer protrudes from the current collector that has been coated with the cathode active material layer and is used as a cathode tab. Taking a lithium-ion battery as an example, the cathode current collector may be made of aluminum, and the cathode active material may be lithium cobalt oxide, lithium iron phosphate, ternary lithium or lithium manganate, etc. The anode electrode plate includes an anode current collector and an anode active material layer. The anode active material layer is coated on a surface of the anode current collector, and the current collector that is not coated with the anode active material layer protrudes from the current collector that has been coated with the anode active material layer and is used as an anode tab. The anode current collector may be made of copper, and the anode active material may be carbon, silicon, etc. In order to ensure that no fusing occurs when a large current passes, there are a plurality of cathode tabs which are stacked together, and there are a plurality of anode tabs which are stacked together. The separator may be polypropylene (PP), polyethylene (PE), etc. In addition, the electrode assembly may have a wound structure or a stacked structure, and the embodiments of the present application are not limited thereto.

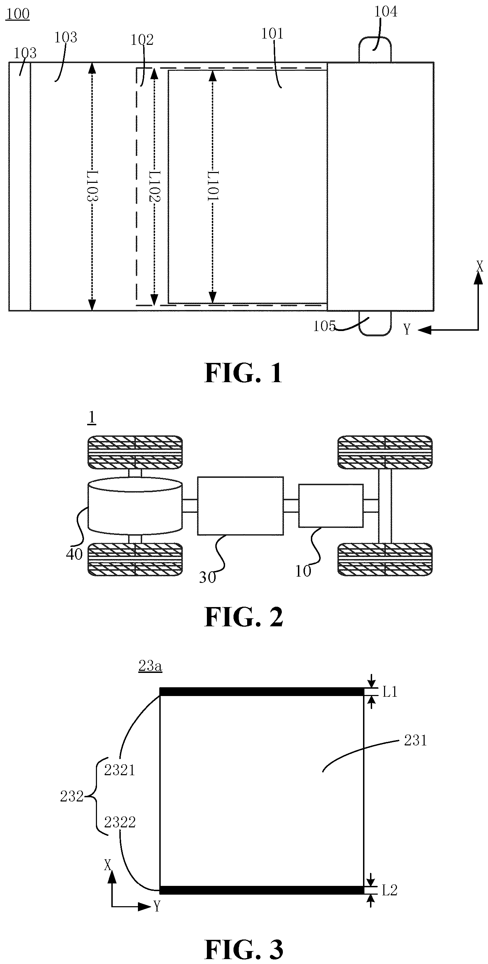

There are many disadvantages in the method for manufacturing a conventional electrode assembly. Fig. 1 shows a schematic structural diagram of a conventional electrode assembly 100. As shown in Fig. 1, a wound electrode assembly 100 is taken as an example for description. Moreover, the left side of Fig. 1 is a schematic view of the partially deployed electrode assembly 100. As shown in Fig. 1, the electrode assembly 100 includes two tabs 104 and 105. For example, the two tabs 104 and 105 may be a cathode tab and an anode tab respectively. The anode tab is connected to an anode electrode plate 102, and the cathode tab is connected to a cathode electrode plate 101. In addition, an example in which the two tabs 104 and 105 are respectively located at two ends of the electrode assembly 100 in a winding axis direction X is taken here for description.

As shown in Fig. 1, the electrode assembly 100 is formed by winding a cathode electrode plate 101, an anode electrode plate 102 and two insulating films 103. The insulating films 103 are used to isolate the cathode electrode plate 101 from the anode electrode plate 102. Specifically, the insulating film 103 is a porous and electronically insulating material. The insulating film 103 has an electronic insulation function, and also conducts ions from the electrolytic solution. For example, the insulating film 103 in a lithium battery can allow for the passage of lithium ions from the electrolytic solution, to prevent lapping and short circuiting between the cathode electrode plate 101 and the anode electrode plate 102.

As shown in Fig. 1, in order to ensure that lapping and short circuiting between the cathode electrode plate 101 and the anode electrode plate 102 do not occur, the length of the insulating film 103 is greater than the length of the cathode electrode plate 101 and the length of the anode electrode plate 102 in both the winding axis direction X of the electrode assembly 100 and a winding direction Y of the electrode assembly 100. In addition, the anode electrode plate 102 in the electrode assembly 100 is generally arranged to wrap the cathode electrode plate 101, with the excess part being to prevent the anode electrode plate 102 from lithium plating and to prevent burrs generated when forming tabs 104 and 105 by die-cutting from piercing the insulating film 103.

However, during production, in the winding axis direction X of the electrode assembly 100, it is likely that the anode electrode plate 102 cannot wrap the cathode electrode plate 101, or the anode electrode plate 102 has poor size to wrap the cathode electrode plate 101, especially when the size difference between the two is small. At present, in order to prevent such poor size during the manufacturing, X-ray online detection is generally used. However, X-ray online detection has problems such as time-consuming, low efficiency, increased manufacturing costs, and low detection accuracy. Moreover, the size difference between the cathode electrode plate 101 and the anode electrode plate 102 can only be detected when it is greater than 1.0 mm, so that the detection accuracy is low.

Therefore, the embodiments of the present application provide a separator of an electrode assembly. A first surface of the separator includes a first passage region and a first blocking region. The first blocking region is formed by spraying or scraping an insulating material on edge regions on two sides of the first surface in a first direction, the first direction is perpendicular to an extension direction of the separator, and the first passage region is the region on the first surface except the first blocking region. The first passage region can allow for the passage of ions from an electrolyte, and the first blocking region can block the ions from the electrolyte, so that when the separator is used to form an electrode assembly by winding, since the first blocking region is provided in the edge regions and can block the ions from the electrolyte, the lengths of the anode electrode plate and the cathode electrode plate in the first direction are no longer limited. The first blocking region can be used to avoid the problem of lithium plating of the anode electrode plate, even if the length of the anode electrode plate in the first direction is less than, or equal to the length of the cathode electrode plate in the first direction. The problem of lithium plating of the anode electrode plate is avoided by using the first blocking region, thereby reducing the manufacturing difficulty and cost of the electrode assembly and improving the manufacturing efficiency of the electrode assembly. Moreover, the insulating material sprayed or scraped on the first blocking region can increase the strength of this region, effectively prevent burrs left after the electrode plate is die-cut to form a tab from piercing the first blocking region of the separator, and reduce the risk of short circuit caused by the burrs piercing the separator.

The technical solutions described in the embodiments of the present application are applicable to various electrical devices using batteries.

The electrical device may be, but not limited to, a vehicle, a mobile phone, a portable device, a laptop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

In the following embodiments, for convenience of description, the electrical device being a vehicle is taken as an example for illustration.

For example, a schematic structural diagram of a vehicle 1 according to an embodiment of the present application is shown in Fig. 2. The vehicle 1 may be a fuel vehicle, a gas vehicle or a new-energy vehicle. The new-energy vehicle may be a battery electric vehicle, a hybrid vehicle or an extended-range vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

The battery 10 may include a box body, and the inside of the box body is a hollow structure. The hollow structure may be configured to receive a plurality of battery cells. Depending on different power requirements, the number of battery cells in the battery 10 may be set to any value. A plurality of battery cells may be in series, parallel or series-parallel connection to achieve a larger capacity or power. Since there may be many battery cells included in each battery 10, the battery cells may be arranged in groups for convenience of installation, and each group of battery cells constitute a battery module. The number of battery cells included in the battery module is not limited, and may be set according to requirements, and these battery modules may be in series, parallel or series-parallel connection.

Optionally, the battery 10 may further include other structures, which will not be described in detail herein. For example, the battery 10 may further include a bus component. The bus component is configured to implement the electrical connection between the plurality of battery cells, such as parallel connection, series connection or series-parallel connection. Specifically, the bus component may implement the electrical connection between the battery cells by connecting electrode terminals of the battery cells. Further, the bus component may be fixed to the electrode terminals of the battery cells by welding. Electric energy of the plurality of battery cells may be further led out through an electrically conductive mechanism penetrating the box body.

The electrode terminals of the battery cell are further configured for electrical connection with the electrode assembly inside the battery cell to output electric energy from the battery cell. The electrode terminals may include a cathode electrode terminal and an anode electrode terminal. The cathode electrode terminal is configured for electrical connection with the cathode tab, and the anode electrode terminal is configured for electrical connection with the anode tab. The cathode electrode terminal may be connected directly or indirectly to the cathode tab, and the anode electrode terminal may be connected directly or indirectly to the anode tab. Illustratively, the cathode electrode terminal is electrically connected to the cathode tab via a connecting member, and the anode electrode terminal is electrically connected to the anode tab via a connecting member.

The battery cell in the embodiments of the present application may include an outer shell and an inner electrode assembly. The shell may be of a hollow structure, which is configured to receive the electrode assembly. A battery cell may be provided with one or more electrode assemblies according to the actual application. The electrode assembly is a component of a battery cell where an electrochemical reaction occurs. The electrode assembly may be a cylinder, a cuboid, etc., and the shell of the battery cell may be correspondingly shaped according to the shape of the electrode assembly. The electrode assembly includes tabs and a main body connected to each other. The main body includes a cathode electrode plate and an anode electrode plate, and the tabs of the electrode assembly may include a cathode tab and a anode tab. Specifically, the main body may be formed by stacking or winding the cathode electrode plate coated with a cathode electrode active material layer and the anode electrode plate coated with an anode electrode active material layer; and the cathode tab may be formed by stacking parts that protrude from the cathode electrode plate and are not coated with the cathode electrode active material layer, and the anode tab may be formed by stacking parts that protrude from the anode electrode plate and not coated with the anode electrode active material layer.

The electrode assembly of the embodiments of the present application may further include a separator, which is configured to isolate the anode electrode plate from the cathode electrode plate. Fig. 3 shows a partial schematic diagram of a separator 23 according to an embodiment of the present application. As shown in Fig. 3, a first surface 23a of the separator 23 includes a first passage region 231 and a first blocking region 232; the first blocking region 232 is formed by spraying or scraping an insulating material on edge regions on two sides of the first surface 23a in a first direction X, the first direction X is perpendicular to an extension direction of the separator 23, and the first passage region 231 is the region on the first surface 23a except the first blocking region 232; and the first passage region 231 is configured for passage of ions from an electrolyte, and the first blocking region 232 is configured to block the ions from the electrolyte. It should be understood that the separator 23 in the embodiment of the present application is a thin film structure. The separator 23 has two surfaces. The two surfaces are two opposite surfaces arranged in a thickness direction of the separator 23. The first surface 23a may be either of the two surfaces.

The separator 23 in the embodiment of the present application may be used to manufacture electrode assemblies, and during the manufacturing, the separator 23 may be used to manufacture multiple electrode assemblies by cutting. For example, the length of the separator 23 in the extension direction Y is generally much greater than the length in the first direction X, so that the separator 23 may be cut multiple times in the first direction X to form multiple separators 23 for multiple electrode assemblies. The first direction X is perpendicular to the extension direction Y, and the thickness direction of the separator 23 is perpendicular to the first direction X and the extension direction Y of the separator 23.

The separator 23 in the embodiment of the present application can block the passage of electrons, so that when the separator 23 is arranged between the anode electrode plate and the cathode electrode plate, the separator can be used to achieve electrical isolation between the anode electrode plate and the cathode electrode plate to avoid short circuit. Specifically, the first passage region 231 of the separator 23 can block the passage of electrons to achieve electrical isolation between the anode electrode plate and the cathode electrode plate, but cannot block the ions from the electrolyte, that is, the ions from the electrolyte can pass through. Differently, the first blocking region 232 can block the passage of electrons to achieve electrical isolation between the anode electrode plate and the cathode electrode plate, and can also block the ions from the electrolyte, that is, the ions from the electrolyte cannot pass through the first blocking region 232.

Therefore, since the separator 23 of the electrode assembly provided in the embodiment of the present application is provided with a first blocking region 232 in the edge regions, it can block the ions from the electrolyte. Therefore, when the separator 23 is used to form an electrode assembly by winding, the lengths of the anode electrode plate and the cathode electrode plate in the first direction X are no longer limited. The first blocking region 232 can be used to avoid the problem of lithium plating of the anode electrode plate, regardless of whether the length of the anode electrode plate in the first direction X is greater than, less than, or equal to the length of the cathode electrode plate in the first direction X. The problem of lithium plating of the anode electrode plate is avoided by using the first blocking region 232, thereby reducing the manufacturing difficulty and cost of the electrode assembly and improving the manufacturing efficiency of the electrode assembly. Moreover, the insulating material sprayed or scraped on the first blocking region 232 can increase the strength of this region, effectively prevent burrs left after the electrode plate is die-cut to form a tab from piercing the first blocking region 232 of the separator 23, and reduce the risk of short circuit caused by the burrs piercing the separator 23.

It should be understood that, as shown in Fig. 3, the first blocking region 232 of the separator 23 is formed by spraying or scraping an insulating material on the edge regions on two sides in the first direction X. Specifically, the first blocking region 232 includes a first sub-region 2321 and a second sub-region 2322 distributed in the first direction X and located on two sides of the first passage region 231 respectively.

Optionally, the shape of the first sub-region 2321 and the shape of the second sub-region 2322 may be the same or different, and both may be set according to the actual application. For example, as shown in Fig. 3, considering that the separator 23 in the embodiment of the present application is a rectangle extending in the direction Y, correspondingly, the first sub-region 2321 and the second sub-region 2322 may also be rectangular, and extend in the direction Y.

Optionally, the dimension L1 of the first sub-region 2321 in the first direction X and the dimension L2 of the second sub-region 2322 in the first direction X both may be set according to the actual application, and the dimension L1 of the first sub-region 2321 in the first direction X and the dimension L2 of the second sub-region 2322 in the first direction X may be the same or different. Specifically, the dimension L1 of the first sub-region 2321 in the first direction X and the dimension L2 of the second sub-region 2322 in the first direction X should not be set too large to avoid increasing costs and causing waste; but it should also not be set too small, as it will increase the difficulty of spraying or scraping the insulating material; and during the manufacturing of the electrode assembly, it is likely to affect the performance of the first blocking region 232 due to errors and other reasons. For example, a value range of the dimension L1 of the first sub-region 2321 in the first direction X may be [2 mm, 3 mm]; and/or a value range of the dimension L2 of the second sub-region 2322 in the first direction X may be [2 mm, 3 mm]. As shown in Fig. 3, an example in which the dimension L1 of the first sub-region 2321 in the first direction X is equal to the dimension L2 of the second sub-region 2322 in the first direction X is taken in the embodiment of the present application for description, the separator 23 is axially symmetrical to facilitate the subsequent manufacturing of the electrode assembly, but the embodiment of the present application is not limited thereto.

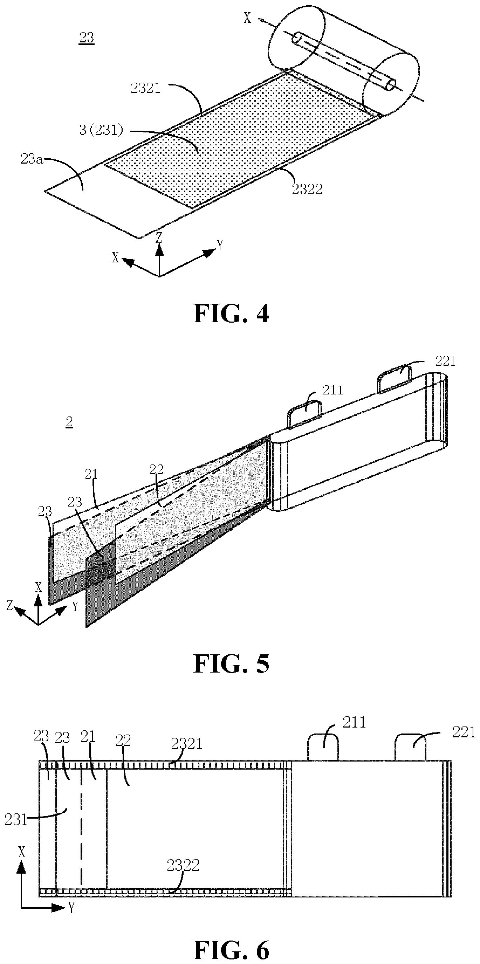

In the embodiment of the present application, the first blocking region 232 of the separator 23 may be formed by spraying or scraping an insulating material, and the insulating material may be sprayed or scraped in various ways to form the first blocking region 232. For example, Fig. 4 shows a schematic diagram of the preparation of a separator 23 of an electrode assembly according to an embodiment of the present application. As shown in Fig. 4, the insulating material may be sprayed or scraped by means of a mask 3.

Specifically, as shown in Fig. 4, a mask 3 is provided on a first surface 23a of a separator 23 to be processed, and two ends of the separator 23 to be processed in the first direction X respectively exceed the corresponding ends of the mask 3 in the first direction X, and a region covered by the mask 3 is a first passage region 231 of the first surface 23a; an insulating material is sprayed or scraped on parts, which exceed the mask 3, of the separator 23 to be processed at two ends in the first direction X to obtain a first blocking region 232 of the first surface 23a; and the mask 3 is removed to obtain the separator 23 of the electrode assembly.

Optionally, the material of the first passage region 231 of the embodiment of the present application may be selected according to the actual application. For example, the material of the first passage region 231 may include at least one of: PP, PE, and poly vinylidene fluoride (PVDF). For example, in the thickness direction Z of the separator 23, the first passage region 231 may include a multi-layer structure. The multi-layer structure may include a substrate layer located in the center, the material of the substrate layer may include PP and PE, and upper and lower surfaces of the substrate layer may be covered with a PVDF adhesive, are attached to the anode electrode plate and the cathode electrode plate via the PVDF adhesive to form an electrode assembly.

Optionally, the insulating material of the first blocking region 232 of the embodiment of the present application may be selected according to the actual application. For example, the insulating material may be aluminum oxide and/or silicon dioxide.

Optionally, the material of the mask 3 in the embodiment of the present application may also be selected according to the actual application. For example, the mask 3 may be a polyethylene terephthalate (PET) film.

In the embodiment of the present application, the first blocking region 232 is formed by spraying or scraping an insulating material, so that the entire manufacturing process is simple and quick. For example, the first passage region 231 and the first blocking region 232 can be formed by the shielding of the mask 3, which is easy to implement and has low costs. Differently, if the first blocking region 232 is formed by applying an insulating adhesive, since the insulating adhesive and the separator 23 are relatively soft, it is likely that the separator 23 and the insulating adhesive will wrinkle, thereby affecting the performance of the separator 23, whereas spraying or scraping the insulating material to form the first blocking region 232 can well avoid these problems, making the manufacturing process easier to implement and more efficient. Moreover, where no first blocking region 232 is provided, the separator 23 is generally very thin. For example, the thickness of the separator 23 is generally only 7-9 µm, while the thickness of the insulating adhesive is generally 30-50 µm. If the insulating adhesive is applied on the separator 23, then the region where the insulating adhesive is applied will protrude from other regions. After being wound or stacked to form an electrode assembly, some regions of the electrode assembly will become loose, eventually leading to problems such as lithium plating or black spots on the surface of the electrode plate, thereby affecting the performance of the battery cell. However, the first blocking region 232 in the embodiment of the present application is formed by spraying or scraping an insulating material, and its thickness is small, so that the above problems can effectively avoided and the performance of the battery cell can be improved.

It should be understood that the separator 23 of the embodiment of the present application can be used to form an electrode assembly. Fig. 5 shows a schematic structural diagram of a partially deployed electrode assembly 2 according to an embodiment of the present application, and Fig. 6 shows a front view of the partially deployed electrode assembly 2 shown in Fig. 5. As shown in Figs. 5 and 6, the electrode assembly 2 includes an anode electrode plate 21, a cathode electrode plate 22 and two layers of separators 23. The separators 23 are each arranged between the anode electrode plate 21 and the cathode electrode plate 22 to isolate the anode electrode plate 21 from the cathode electrode plate 22. The separators 23 each may be the separator of the embodiment of the present application shown in Figs. 3 and 4.

Optionally, the electrode assembly 2 of the embodiment of the present application may be of a wound or stacked type, and the embodiment of the present application is not limited thereto. For example, as shown in Figs. 5 and 6, the electrode assembly 2 of the embodiment of the present application may be a wound electrode assembly. Specifically, the electrode assembly 2 is formed by winding the anode electrode plate 21, the separators 23 and the cathode electrode plate 22 around a winding axis, and the first direction X is the direction of the winding axis.

Alternatively, the electrode assembly 2 of the embodiment of the present application may also be a stacked electrode assembly. For example, the electrode assembly 2 is configured such that a plurality of anode electrode plates 21, a separator 23 and a plurality of cathode electrode plates 22 are alternately stacked in a second direction Z. The second direction Z is perpendicular to the first direction X, or in other words, the second direction Z is the thickness direction of the separator 23, and the separator 23 may be arranged between the anode electrode plate 21 and the cathode electrode plate 22 by repeatedly folding. For another example, the electrode assembly 2 may also be configured such that an anode electrode plate 21, a separator 23 and a plurality of cathode electrode plates 22 are alternately stacked in the second direction Z. The anode electrode plate 21 and the separator 23 are repeatedly folded so as to be stacked with the plurality of cathode electrode plates 22 to form the electrode assembly 2, and the embodiment of the present application is not limited thereto.

Optionally, in Figs. 5 and 6, two tabs 211 and 221 of the electrode assembly 2 are located on the same end face of the electrode assembly 2 as an example. Differently, the two tabs 211 and 221 of the electrode assembly 2 may also be located on different end faces, and the embodiment of the present application is not limited thereto.

The separator 23 in the embodiments of the present application will be described in detail below with reference to the accompanying drawings.

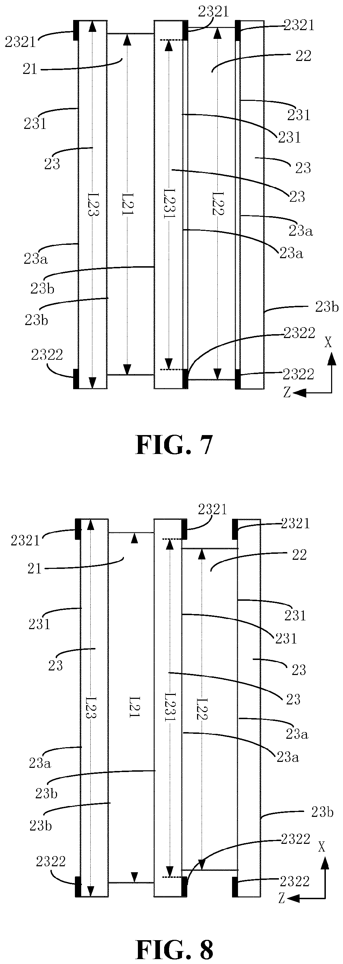

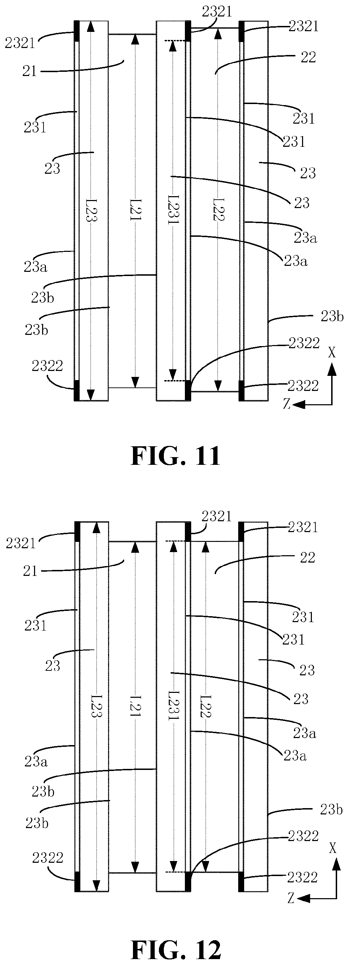

Figs. 7 to 12 respectively show several possible schematic diagrams of partial cross-sections taken along the thickness direction of the electrode assembly 2 according to the embodiment of the present application. Figs. 7 to 12 respectively show that in the electrode assembly 2, a layer of anode electrode plate 21 and a layer of cathode electrode plate 22 are between three layers of separators 23, and the three layers of separators 23 being identical separators 23 is taken as an example for description. Moreover, as shown in Figs. 7 to 12, since the actual thicknesses of the anode electrode plate 21, the cathode electrode plate 22 and the separator 23 are small, in order to facilitate explanation and understanding, the thicknesses of the anode electrode plate 21, the cathode electrode plate 22 and the separator 23 are enlarged in Figs. 7 and 12.

As shown in Figs. 7 to 12, the separator 23 of the embodiment of the present application satisfies that a dimension L231 of the first passage region 231 in the first direction X is less than or equal to a first dimension L21, the first dimension L21 being a dimension L21 of the anode electrode plate 21 in the first direction X that is isolated by the separator 23; and a dimension L23 of the separator 23 in the first direction X is greater than the first dimension L21 and greater than a second dimension L22, the second dimension L22 being a dimension L22 of the cathode electrode plate 22 in the first direction X that is isolated by the separator 23. Specifically, the dimension L23 of the first separator 23 in the first direction X is greater than the first dimension L21 and greater than the second dimension L22. In this way, in the electrode assembly 2, the separator 23 can prevent two ends of the anode electrode plate 21 in the first direction X and two ends of the cathode electrode plate 22 in the first direction X from exceeding the corresponding ends of the separator 23 in the first direction X, to ensure that the separator 23 can block the anode electrode plate 21 from the cathode electrode plate 22 to avoid short circuit.

In addition, the dimension L231 of the first passage region 231 of the separator 23 in the first direction X is less than or equal to the first dimension L21. In this way, in the formed electrode assembly 2, two boundary lines of the first passage region 231 in the first direction X do not exceed the corresponding ends of the anode electrode plate 21 in the first direction X respectively, that is, the two ends of the anode electrode plate 21 in the first direction X correspond to the first blocking region 232. In this way, no matter the dimension L22 of the cathode electrode plate 22 in the first direction X is greater than, or equal to, or less than the dimension L21 of the anode electrode plate 21 in the first direction X, or in other words, the dimension L231 of the first passage region 231 in the first direction X is less than, or equal to, or greater than the second dimension L22, the problem of lithium plating can be avoided by means of the first blocking region 232, the dimension requirements during the manufacturing of the anode electrode plate 21 and the cathode electrode plate 22 are reduced, the cost of using X-rays for detection is thus reduced, and the manufacturing efficiency of the electrode assembly 2 is improved.

Optionally, as an embodiment, as shown in Figs. 7 and 8, the first surface 23a of the separator 23 being the surface of the separator 23 facing the cathode electrode plate 22 is taken as an example. The dimension L231 of the first passage region 231 in the first direction X may be less than or equal to the first dimension L21. For example, the dimension L231 of the first passage region 231 in the first direction X being less than the first dimension L21 is taken as an example in Figs. 7 and 8. In this case, two ends of the anode electrode plate 21 in the first direction X correspond to the first blocking region 232. The dimension L23 of the separator 23 in the first direction X is greater than the first dimension L21 and greater than the second dimension L22. In this case, as shown in Fig. 7, the second dimension L22 may be set to be greater than the first dimension L21, that is, the dimension L231 of the first passage region 231 in the first direction X is less than the second dimension L22, then the two ends of the cathode electrode plate 21 in the first direction X correspond to the first blocking region 232. Alternatively, the second dimension L22 may be set to be less than the first dimension L21, then the two ends of the cathode electrode plate 21 in the first direction X may correspond to the first blocking region 232, or may correspond to the first passage region 231 as shown in Fig. 8, or may be flush with the corresponding ends of the first passage region 231 in the first direction X. Alternatively, the second dimension L22 may be set to be equal to the first dimension L21, that is, the dimension L231 of the first passage region 231 in the first direction X is equal to the second dimension L22, then the two ends of the cathode electrode plate 21 in the first direction X may correspondingly be flush with the two ends of the anode electrode plate 22 in the first direction X. Due to the existence of the first blocking region 232, there is no risk of lithium plating in each of the above situations, but the dimension requirements for the anode electrode plate 21 and the cathode electrode plate 22 are reduced, and the cost of using X-rays for detection is thus reduced, thereby improving the manufacturing efficiency of the electrode assembly 2. Furthermore, considering that burrs are more likely to occur when forming the cathode tab by die-cutting, the first blocking region 232 is arranged on the surface facing the cathode electrode plate 22, and this can reduce the possibility of the separator 23 being punctured by the burrs to a greater extent compared with the case where the first blocking region 232 is arranged on the surface facing the anode electrode plate 21.

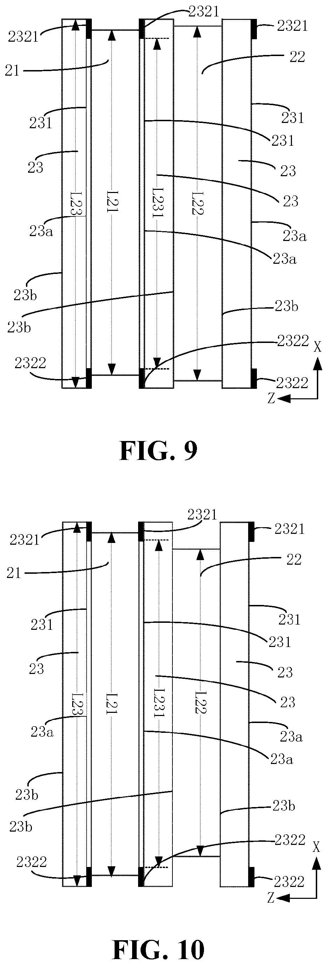

Optionally, as another embodiment, as shown in Figs. 9 and 10, the first surface 23a of the separator 23 being the surface of the separator 23 facing the anode electrode plate 21 is taken as an example. Similar to Figs. 7 and 8, the dimension L231 of the first passage region 231 in the first direction X may be less than or equal to the first dimension L21. For example, the dimension L231 of the first passage region 231 in the first direction X being less than the first dimension L21 is taken as an example in Figs. 9 and 10. In this case, two ends of the anode electrode plate 21 in the first direction X correspond to the first blocking region 232. The dimension L23 of the separator 23 in the first direction X is greater than the first dimension L21 and greater than the second dimension L22. In this case, as shown in Fig. 9, the second dimension L22 may be set to be greater than the first dimension L21, then the two ends of the cathode electrode plate 21 in the first direction X may both correspond to the first blocking region 232. Alternatively, the second dimension L22 may be set to be less than the first dimension L21, then the two ends of the cathode electrode plate 21 in the first direction X may correspond to the first blocking region 232, or may correspond to the first passage region 231 as shown in Fig. 10, or may be flush with the corresponding ends of the first passage region 231 in the first direction X. Alternatively, the second dimension L22 may be set to be equal to the first dimension L21, then the two ends of the cathode electrode plate 21 in the first direction X may correspondingly be flush with the two ends of the anode electrode plate 22 in the first direction X. Due to the existence of the first blocking region 232, there is also no risk of lithium plating, and the dimension requirements for the anode electrode plate 21 and the cathode electrode plate 22 are reduced, thereby improving the manufacturing efficiency of the electrode assembly 2.

It should be understood that for the case where the first dimension L21 is equal to the second dimension L22, the two ends of the anode electrode plate 21 in the first direction X may be flush with the corresponding ends of the cathode electrode plate L22 in the first direction X, and the capacity of the electrode assembly 2 can be increased compared with the non-flush case. For example, taking an example in which the dimension L21 of the anode electrode plate 21 in the first direction X is equal to the first passage region 231, that is, the two ends of the anode electrode plate 21 in the first direction X are flush with the corresponding ends of the first passage region 231 in the first direction X, in this case, assuming that the difference between the dimension L21 of the anode electrode plate 21 in the first direction X and the dimension L22 of the dimension L22 of the cathode electrode plate L22 in the first direction X is 4 mm, and that the dimension L22 of the cathode electrode plate L22 in the first direction X is smaller and is 100 mm, the capacity of the battery cell formed by the electrode assembly 2 is set to be 100 Ah for calculation, then when the second dimension L22 is set to be equal to the first dimension L21, the dimension L22 of the cathode electrode plate L22 in the first direction X may be increased by 4 mm, and the two ends of the anode electrode plate 21 in the first direction X may be flush with the corresponding ends of the cathode electrode plate L22 in the first direction X, and the capacity of the corresponding battery cell may be increased by 4 Ah.

Optionally, as shown in Figs. 7 to 10, although the first blocking region 232 is formed by spraying or scraping an insulating material, the thickness of the first blocking region 232 can be very small, but still slightly protrude from the surface of the first passage region 231, resulting in a gap between the separator 23 and the anode electrode plate 21 or the cathode electrode plate 22. In order to reduce the gap, the first blocking region 232 and the first passage region 231 can be arranged flush with each other in the thickness direction Z. Specifically, considering that the two surfaces of the separator 23 are generally provided with an PVDF adhesive for contacting and fixing the anode electrode plate 21 and the cathode electrode plate 22, therefore, the PVDF adhesive may be provided in the first passage region 231, while no PVDF adhesive is provided in the first blocking region 232, and the thickness of the insulating material sprayed or scraped in the first blocking region 232 is equal to the thickness of the PVDF adhesive in the first passage region 231. In this way, the first blocking region 232 can be flush with the first passage region 231 to avoid the gap between the anode electrode plate 21 and the separator 23 and the gap between the cathode electrode plate 22 and the separator 23, thereby preventing the electrode assembly 2 from loosening.

Optionally, for the case where the first blocking region 232 and the first passage region 231 are flush with each other in the thickness direction Z, the separator 23 also satisfies that the dimension L231 of the first passage region 231 in the first direction X is less than or equal to the first dimension L21; and the dimension L23 of the separator 23 in the first direction X is greater than the first dimension L21 and greater than the second dimension L22, so as to avoid lithium plating. For example, in Figs. 11 and 12, the first surface 23a of the separator 23 being the surface of the separator 23 facing the cathode electrode plate 22 is taken as an example. As shown in Fig. 11, the dimension L231 of the first passage region 231 in the first direction X may be less than the first dimension L21, and the first dimension L21 may be less than the second dimension L22, that is, the dimension L231 of the first passage region 231 in the first direction X is less than the second dimension L22, then the two ends of the anode electrode plate 21 in the first direction X and the two ends of the cathode electrode plate 22 in the first direction X both correspond to the first blocking region 232. For another example, as shown in Fig. 12, it is possible that the dimension L231 of the first passage region 231 in the first direction X is equal to the first dimension L21 and equal to the second dimension L22, then the two ends of the cathode electrode plate 22 in the first direction X may be flush with the corresponding ends of the anode electrode plate 21 in the first direction X respectively, and may also be flush with the corresponding ends of the first passage region 231 in the first direction X. The problem of lithium plating can be avoided in the situations shown in Figs. 11 and 12.

It should be understood that the above description takes the first passage region 231 and the first blocking region 232 on the first surface 23a of the separator 23 as an example, and when the first passage region 231 and the first blocking region 232 are only provided on the first surface 23a, the manufacturing process is simple and the cost is low. However, similar to the first surface 23a, the second surface 23b of the separator 23 may be provided with a second passage region 233 and a second blocking region 234.

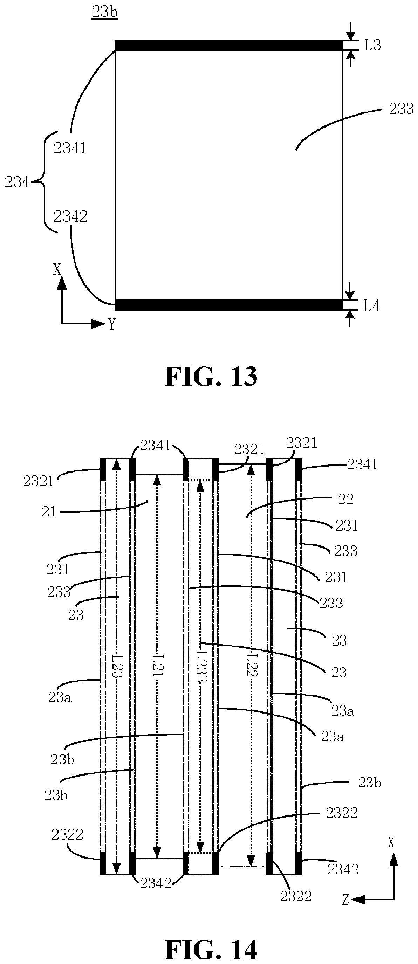

Fig. 13 shows a partial schematic diagram of a separator 23 according to an embodiment of the present application. As shown in Fig. 13, the second surface 23b of the separator 23 includes a second passage region 233 and a second blocking region 234, the second surface 23b is arranged opposite to the first surface 23a, the second blocking region 234 is formed by spraying or scraping an insulating material on edge regions on two sides of the second surface 23b in the first direction X, the second passage region 233 is the region on the second surface 23b except the second blocking region 234, the second passage region 233 is configured for passage of ions from an electrolyte, and the second blocking region 234 is configured to block the ions from the electrolyte.

The second surface 23b in the embodiment of the present application is a surface opposite to the first surface 23a. For example, if the first surface 23a is the surface of the separator 23 facing the anode electrode plate 21, then the second surface 23b is the surface of the separator 23 facing the cathode electrode plate 22. Conversely, if the first surface 23a is the surface of the separator 23 facing the cathode electrode plate 22, then the second surface 23b is the surface of the separator 23 facing the anode electrode plate 21.

The provision of the first blocking region 232 and the second blocking region 234 respectively on the two surfaces 23a and 23b of the separator 23 can effectively avoid the problem of lithium plating, and can further increase the thickness of the two ends of the separator 23, that is, increase the strength of the two ends of the separator 23, and thus can avoid the burrs from piercing the separator 23 and avoid short circuit, further improving the performance of the electrode assembly 2.

It should be understood that the arrangement of the second surface 23b in the embodiment of the present application is similar to the arrangement of the first surface 23a. The second passage region 233 corresponds to the first passage region 231, to which the description of the first passage region 231 is applicable; and the second blocking region 234 corresponds to the first blocking region 232, to which the description of the first blocking region 232 is applicable. For the sake of simplicity, they will not be described again here.

For example, the second passage region 233 and the second blocking region 234 may also be manufactured by means of the mask 3. The insulating material of the second blocking region 234 may be selected according to the actual application. For example, the insulating material may be aluminum oxide and/or silicon dioxide, and the insulating material of the second blocking region 234 and the insulating material of the first blocking region 232 may be the same or different. The material of the second passage region 233 may also be selected according to the actual application. For example, the material of the second passage region 233 includes at least one of: PP, PE and PVDF, and the materials of the second passage region 233 and the first passage region 231 may also be the same or different, and the embodiment of the present application is not limited thereto.

As shown in Fig. 13, the second blocking region 234 includes a third sub-region 2341 and a fourth sub-region 2342 distributed in the first direction X and located on two sides of the second passage region 233 respectively. Furthermore, a dimension L3 of the third sub-region 2341 in the first direction X and a dimension L4 of the fourth sub-region 2342 in the first direction X both may be set according to the actual application. Specifically, similar to the first sub-region 2321 and the second sub-region 2322, the dimension L3 of the third sub-region 2341 in the first direction X and the dimension L4 of the fourth sub-region 2342 in the first direction X should not be set too large to avoid increasing costs and causing waste; but it should also not be set too small, as it will increase the difficulty of spraying or scraping the insulating material; and during the manufacturing of the electrode assembly 2, it is likely to affect the performance of the second blocking region 234 due to errors and other reasons. For example, a value range of the dimension L3 of the third sub-region 2341 in the first direction X may be [2 mm, 3 mm], and/ or a value range of the dimension L4 of the fourth sub-region 2342 in the first direction X may be [2 mm, 3 mm]. Optionally, the dimension L3 of the third sub-region 2341 in the first direction X and the dimension L4 of the fourth sub-region 2342 in the first direction X may be the same or different; the dimension L3 of the third sub-region 2341 in the first direction X and the dimension L1 of the first sub-region 2321 in the first direction X may be the same or different; and the dimension L4 of the fourth sub-region 2342 in the first direction X and the dimension L2 of the second sub-region 2322 in the first direction X may also be the same or different, and the embodiment of the present application is not limited thereto.

An example is taken below for description, in which two boundary lines of the second passage region 233 in the first direction X are respectively flush with the corresponding boundary lines of the first passage region 231 in the first direction X, that is, the dimension L1 of the first sub-region 2321 in the first direction X, the dimension L2 of the second sub-region 2322 in the first direction X, the dimension L3 of the third sub-region 2341 in the first direction X, and the dimensions L4 of the fourth sub-region 2342 in the first direction X are all the same, such an arrangement facilitates the manufacturing of the separator 23, so that the two surfaces 23a and 23b of the separator 23 are completely consistent, and the separator 23 is axially symmetrical along a center line of the separator 23 that is perpendicular to the first direction X. When manufacturing the electrode assembly 2, it is not necessary to distinguish the two surfaces 23a and 23b and the specific orientation of the separator 23, making the manufacturing easier and improving the manufacturing efficiency.

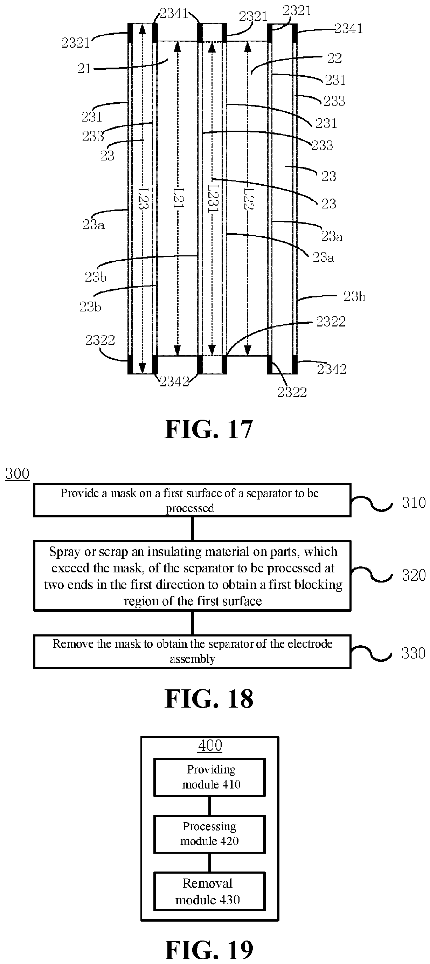

Figs. 14 to 17 respectively show several further possible schematic diagrams of partial cross-sections taken along the thickness direction of the electrode assembly 2 according to the embodiment of the present application. Figs. 14 to 17 respectively show that in the electrode assembly 2, a layer of anode electrode plate 21 and a layer of cathode electrode plate 22 are between three layers of separators 23, and the three layers of separators 23 being identical separators 23 is taken as an example for description. Moreover, in Figs. 14 to 17, an example is taken in which the first surface 23a is the surface of the separator 23 facing the cathode electrode plate 22, and the second surface 23b is the surface of the separator 23 facing the anode electrode plate 21, but the following description is also applicable to the case where the first surface 23a is the surface of the separator 23 facing the anode electrode plate 21, and the second surface 23b is the surface of the separator 23 facing the cathode electrode plate 22, which will not be described again. Similar to Figs. 7 to 12, since the actual thicknesses of the anode electrode plate 21, the cathode electrode plate 22 and the separator 23 are small, in order to facilitate explanation and understanding, the thicknesses of the anode electrode plate 21, the cathode electrode plate 22 and the separator 23 are also enlarged in Figs. 14 and 17.

As shown in Figs. 14 to 17, a dimension L233 of the second passage region 233 in the first direction X is less than or equal to a first dimension L21, the first dimension L21 being a dimension L21 of the anode electrode plate 21 in the first direction X that is isolated by the separator 23. Specifically, the second passage region 233 is similar to the first passage region 231. By setting the dimension L233 of the second passage region 233 in the first direction X to be less than or equal to the first dimension L21, two ends of the anode electrode plate 21 in the first direction X both correspond to the second blocking region 234. In this way, no matter the dimension L22 of the cathode electrode plate 21 in the first direction X is greater than, or equal to, or less than the dimension L21 of the anode electrode plate 21 in the first direction X, or in other words, the dimension L233 of the second passage region 233 in the first direction X is less than, or equal to, or greater than the second dimension L22, the problem of lithium plating can be avoided by means of the second blocking region 234, the dimension requirements during the manufacturing of the anode electrode plate 21 and the cathode electrode plate 22 are reduced, the cost of using X-rays for detection is thus reduced, and the manufacturing efficiency of the electrode assembly 2 is improved.

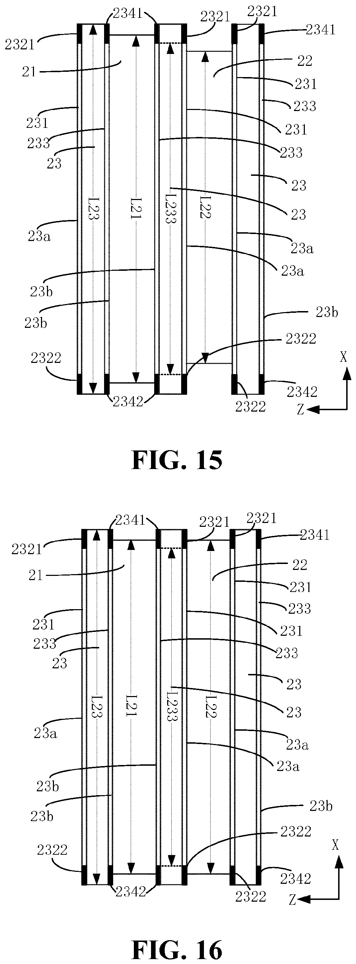

Optionally, as an embodiment, as shown in Figs. 14 and 15, the dimension L233 of the second passage region 233 in the first direction X in the embodiment of the present application may be less than the first dimension L21, then the boundary lines at two ends of the second passage region 233 in the first direction X may not exceed the anode electrode plate, or in other words, the two ends of the anode electrode plate 21 in the first direction X both correspond to the second blocking region 234. The second dimension L22 may be set to be greater than the first dimension L21 as shown in Fig. 14, and the two ends of the cathode electrode plate 22 in the first direction X then may also correspond to the second blocking region 234. Alternatively, the second dimension L22 may be set to be less than the first dimension L21, and the two ends of the cathode electrode plate 22 in the first direction X then may correspond to the second blocking region 234, or correspond to the second passage region 233 as shown in Fig. 15, or are flush with corresponding ends of the second passage region 233. Due to the existence of the first blocking region 232 and the second blocking region 234, there is no risk of lithium plating in each of the above situations, but the dimension requirements for the anode electrode plate 21 and the cathode electrode plate 22 are reduced, and the cost of using X-rays for detection is thus reduced, thereby improving the manufacturing efficiency of the electrode assembly 2.

Optionally, as another embodiment, as shown in Figs. 16 and 17, the first dimension L21 in the embodiment of the present application may be equal to the second dimension L22. For example, as shown in Fig. 16, the dimension L233 of the second passage region 233 in the first direction X may be less than the first dimension L21 and less than the second dimension L22, and the two ends of the anode electrode plate 21 in the first direction X and the two ends of the cathode electrode plate 22 in the first direction X both correspond to the second blocking region 234. For another example, as shown in Fig. 17, the dimension L233 of the second passage region 233 in the first direction X may be equal to the first dimension L21 and equal to the second dimension L22, and the two ends of the second passage region 233 in the first direction X are then respectively flush with the corresponding ends of the anode electrode plate 21 in the first direction X and also respectively flush with the corresponding ends of the cathode electrode plate 22 in the first direction X.

Compared with the case where the first dimension L21 may be unequal to the second dimension L22 shown in Figs. 14 and 15, in the embodiments shown in Figs. 16 and 17, since the two ends of the anode electrode plate 21 in the first direction X may be flush with the corresponding ends of the cathode electrode plate 22 in the first direction X, and there is no dimension difference between the two, when the capacity of the electrode assembly 2 is the same, the cost can be reduced; or when the cost is the same, the capacity of the electrode assembly 2 can be increased. For example, taking an example in which the dimension L21 of the anode electrode plate 21 in the first direction X is equal to the second passage region 233, that is, the two ends of the anode electrode plate 21 in the first direction X are flush with the corresponding ends of the second passage region 233 in the first direction X. In this case, assuming that the difference between the dimension L21 of the anode electrode plate 21 in the first direction X and the dimension L22 of the dimension L22 of the cathode electrode plate L22 in the first direction X is 4 mm, and that the dimension L22 of the cathode electrode plate L22 in the first direction X is smaller and is 100 mm, the capacity of the battery cell formed by the electrode assembly 2 is set to be 100 Ah for calculation, then when the second dimension L22 is set to be equal to the first dimension L21, the dimension L22 of the cathode electrode plate L22 in the first direction X may be increased by 4 mm, and the two ends of the anode electrode plate 21 in the first direction X may be flush with the corresponding ends of the cathode electrode plate L22 in the first direction X, and the capacity of the corresponding battery cell may be increased by 4 Ah.

Compared with Figs. 16 and 17, if the dimension L233 of the second passage region 233 in the first direction X in Fig. 16 is the same as that in Fig. 17, the capacity of electrode assembly 2 in Fig. 16 can be guaranteed to be the same as that in Fig. 17, but the embodiment shown in Fig. 17 requires a smaller dimension L22 of the cathode electrode plate 22 in the first direction X and a smaller dimension L21 of the anode electrode plate 21 in the first direction X, so that the cost can be further reduced.

The electrode assembly 2 and the separator 23 according to the embodiments of the present application are described above, and a method and device for preparing a separator 23 of an electrode assembly 2 according to the embodiments of the present application will be described below. For the parts not described in detail, reference can be made to the foregoing embodiments.

Fig. 18 shows a schematic flow chart of a method 300 for preparing a separator 23 of an electrode assembly 2 according to an embodiment of the present application. As shown in Fig. 18, the method 300 may include: S310, providing a mask 3 on a first surface 23a of a separator 23 to be processed, where two ends of the separator 23 to be processed in a first direction X respectively exceed corresponding ends of the mask 3 in the first direction X, a region covered by the mask 3 is a first passage region 231 of the first surface 23a, the first passage region 231 is configured for passage of ions from an electrolyte, and the first direction X is perpendicular to an extension direction of the separator 23 to be processed; S320, spraying or scraping an insulating material on parts, which exceed the mask 3, of the separator 23 to be processed at two ends in the first direction X to obtain a first blocking region 232 of the first surface 23a, where the first blocking region 232 is configured to block the ions from the electrolyte; and S330, removing the mask 3 to obtain the separator 23 of the electrode assembly.

In some embodiments, the mask 3 is a PET film.

Fig. 19 shows a schematic block diagram of a device 400 for preparing a separator 23 of an electrode assembly 2 according to an embodiment of the present application. As shown in Fig. 19, the device 400 may include: a providing module 410 configured to provide a mask 3 on a first surface 23a of a separator 23 to be processed, where two ends of the separator 23 to be processed in a first direction X respectively exceed corresponding ends of the mask 3 in the first direction X, a region covered by the mask 3 is a first passage region 231 of the first surface 23a, the first passage region 231 is configured for passage of ions from an electrolyte, and the first direction X is perpendicular to an extension direction of the separator 23 to be processed; a processing module 420 configured to spray or scrap an insulating material on parts, which exceed the mask 3, of the separator 23 to be processed at two ends in the first direction X to obtain a first blocking region 232 of the first surface 23a, where the first blocking region 232 is configured to block the ions from the electrolyte; and a removal module 430 configured to remove the mask 3 to obtain the separator 23 of the electrode assembly.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A separator (23) of an electrode assembly, wherein a first surface (23a) of the separator (23) comprises a first passage region (231) and a first blocking region (232);
the first blocking region (232) is formed by spraying or scraping an insulating material on edge regions on two sides of the first surface (23a) in a first direction, the first direction is perpendicular to an extension direction of the separator (23), and the first passage region (231) is the region on the first surface (23a) except the first blocking region (232); and
the first passage region (231) is configured for passage of ions from an electrolyte, and the first blocking region (232) is configured to block the ions from the electrolyte.

2. The separator (23) according to claim 1, wherein a dimension (L231) of the first passage region (231) in the first direction is less than or equal to a first dimension (L21), the first dimension (L21) being a dimension of an anode electrode plate in the first direction that is isolated by the separator (23); and
a dimension (L23) of the separator (23) in the first direction is greater than the first dimension (L21) and greater than a second dimension (L22), the second dimension (L22) being a dimension of a cathode electrode plate in the first direction that is isolated by the separator (23).

3. The separator (23) according to claim 2, wherein the first blocking region (232) comprises a first sub-region (2321) and a second sub-region (2322) distributed in the first direction and located on two sides of the first passage region (231), and a value range of a dimension of the first sub-region (2321) and/or the second sub-region (2322) in the first direction is [2 mm, 3 mm].

4. The separator (23) according to claim 3, wherein the dimension of the first sub-region (2321) in the first direction is equal to the dimension of the second sub-region (2322) in the first direction.

5. The separator (23) according to any one of claims 2 to 4, wherein the dimension (L231) of the first passage region (231) in the first direction is less than or equal to the second dimension (L22).

6. The separator (23) according to any one of claims 2 to 5, wherein the first surface (23a) is a surface of the separator (23) facing the cathode electrode plate.

7. The separator (23) according to any one of claims 1 to 6, wherein the second surface (23b) of the separator (23) comprises a second passage region (233) and a second blocking region (234), the second surface (23b) is arranged opposite to the first surface (23a), the second blocking region (234) is formed by spraying or scraping an insulating material on edge regions on two sides of the second surface (23b) in the first direction, the second passage region (233) is the region on the second surface (23b) except the second blocking region (234), the second passage region (233) is configured for passage of ions from an electrolyte, and the second blocking region (234) is configured to block the ions from the electrolyte.

8. The separator (23) according to claim 7, wherein a dimension (L233) of the second passage region (233) in the first direction is less than or equal to a first dimension (L21), the first dimension (L21) being a dimension of an anode electrode plate in the first direction that is isolated by the separator (23).

9. The separator (23) according to claim 8, wherein the second blocking region (234) comprises a third sub-region (2341) and a fourth sub-region (2342) distributed in the first direction and located on two sides of the second passage region (233), and a value range of a dimension of the third sub-region (2341) and/or the fourth sub-region (2342) in the first direction is [2 mm, 3 mm].

10. The separator (23) according to claim 9, wherein the dimension of the third sub-region (2341) in the first direction is equal to the dimension of the fourth sub-region (2342) in the first direction.

11. The separator (23) according to any one of claims 7 to 10, wherein two boundary lines of the second passage region (233) in the first direction are respectively flush with corresponding boundary lines of the first passage region (231) in the first direction.

12. The separator (23) according to any one of claims 1 to 11, wherein the insulating material is aluminum oxide and/or silicon dioxide.

13. The separator (23) according to any one of claims 1 to 12, wherein the material of the passage region comprises at least one of: polypropylene (PP), polyethylene (PE) and poly vinylidene fluoride (PVDF).

14. An electrode assembly, comprising:
an anode electrode plate (21);
a cathode electrode plate (22); and
a separator (23) of any one of claims 1 to 13, wherein the separator (23) is arranged between the anode electrode plate (21) and the cathode electrode plate (22) to isolate the anode electrode plate (21) from the cathode electrode plate (22).

15. The electrode assembly according to claim 14, wherein two boundary lines of the first passage region (231) in the first direction do not exceed corresponding ends of the anode electrode plate (21) in the first direction respectively.

16. The electrode assembly according to claim 14 or 15, wherein the second surface (23b) of the separator (23) comprises a second passage region (233) and a second blocking region (234), the second surface (23b) is arranged opposite to the first surface (23a), the second blocking region (234) is formed by spraying or scraping an insulating material on edge regions on two sides of the second surface (23b) in the first direction, the second passage region (233) is the region on the second surface (23b) except the second blocking region (234), the second passage region (233) is configured for passage of ions from an electrolyte, and the second blocking region (234) is configured to block the ions from the electrolyte; and
two boundary lines of the second passage region (233) in the first direction do not exceed corresponding ends of the anode electrode plate (21) in the first direction respectively.

17. The electrode assembly according to claim 15 or 16, wherein two ends of the cathode electrode plate (22) in the first direction are respectively flush with corresponding ends of the anode electrode plate (21) in the first direction.

18. The electrode assembly according to any one of claims 14 to 17, wherein the electrode assembly is formed by winding the anode electrode plate (21), the separator (23) and the cathode electrode plate (22) around a winding axis, and the first direction is the direction of the winding axis.

19. The electrode assembly according to any one of claims 14 to 17, wherein the electrode assembly is configured such that a plurality of anode electrode plates (21), the separator (23) and a plurality of cathode electrode plates (22) are alternately stacked in a second direction, which is perpendicular to the first direction.

20. A battery cell, comprising: an electrode assembly according to any one of claims 14 to 19.

21. A battery, comprising a battery cell according to claim 20.

22. An electrical device, comprising: a battery according to claim 21, the battery being configured to supply electric energy to the electrical device.

23. A method for preparing a separator of an electrode assembly, the method comprising:
providing a mask (3) on a first surface (23a) of a separator (23) to be processed, wherein two ends of the separator (23) to be processed in a first direction respectively exceed corresponding ends of the mask (3) in the first direction, a region covered by the mask (3) is a first passage region (231) of the first surface (23a), the first passage region (231) is configured for passage of ions from an electrolyte, and the first direction is perpendicular to an extension direction of the separator (23) to be processed;
spraying or scraping an insulating material on parts, which exceed the mask (3), of the separator (23) to be processed at two ends in the first direction to obtain a first blocking region (232) of the first surface (23a), wherein the first blocking region (232) is configured to block the ions from the electrolyte; and
removing the mask (3) to obtain the separator (23) of the electrode assembly.

24. The method according to claim 23, wherein the mask (3) is a polyethylene terephthalate (PET) film.

25. A device for preparing a separator of an electrode assembly, the device comprising:
a providing module configured to provide a mask (3) on a first surface (23a) of a separator (23) to be processed, wherein two ends of the separator (23) to be processed in a first direction respectively exceed corresponding ends of the mask (3) in the first direction, a region covered by the mask (3) is a first passage region (231) of the first surface (23a), the first passage region (231) is configured for passage of ions from an electrolyte, and the first direction is perpendicular to an extension direction of the separator (23) to be processed;
a processing module configured to spray or scrap an insulating material on parts, which exceed the mask (3), of the separator (23) to be processed at two ends in the first direction to obtain a first blocking region (232) of the first surface (23a), wherein the first blocking region (232) is configured to block the ions from the electrolyte; and
a removal module configured to remove the mask (3) to obtain the separator (23) of the electrode assembly.
